# NEUE EUROPÄISCHE PATENTSCHRIFT

(11) **EP 3 494 771 B2**
(45) Veröffentlichungstag und Bekanntmachung des Hinweises auf die Entscheidung über den Einspruch: **22.11.2023**
(45) Hinweis auf die Patenterteilung: 09.12.2020
(21) Anmeldenummer: 18200068.7
(22) Anmeldetag: 12.10.2018
(51) Int. Cl.: A01D 41/127, A01D 41/14

(54) **SCHNITTHÖHENAUTOMATIK**
AUTOMATED CUTTING HEIGHT SYSTEM
DISPOSITIF DE HAUTEUR DE COUPE AUTOMATIQUE

(30) Priorität: 07.12.2017 DE 102017129193
(43) Veröffentlichungstag der Anmeldung: 12.06.2019
(73) Patentinhaber: CLAAS Selbstfahrende Erntemaschinen GmbH, 33428 Harsewinkel (DE)
(72) Erfinder: Neitemeier, Dennis, 59510 Lippetal (DE); Baumgarten, Joachim, 48361 Beelen (DE); Wilken, Andreas, 49143 Bissendorf (DE); Bormann, Bastian, 33334 Gütersloh (DE)
(74) Vertreter: CLAAS Gruppe

(56) Entgegenhaltungen:
- EP-A1- 2 517 549
- EP-A1- 2 545 761
- EP-A1- 3 011 824
- EP-A1- 3 085 221
- DE-T5-112014 000 906
- Andrea Klüßendorf-Feiffer: ?Druscheignung als zentrale Führungsgröße im Erntemanagement??
- M. Axmann: ?Aspekte der Anwendung optimierter Schnitthöhen beim Mähdrusch", Agrartechnik, 1985
- ?Hochschnitt bringt bis zu 50 % mehr Leistung?, Lohnunternehmen in 2011

## Beschreibung

Die vorliegende Erfindung betrifft ein Verfahren zum Betreiben einer selbstfahrenden Erntemaschine gemäß dem Oberbegriff des Anspruches 1 sowie eine selbstfahrende Erntemaschine gemäß dem Oberbegriff des Anspruches 10.

Für ein Betreiben von Erntemaschinen mit Vorsatzgerät zum Schneiden und Aufnehmen von Erntegut ist vorgesehen, mittels einer auf der Erntemaschine angeordneten Steuerungsvorrichtung einen oder mehrere Betriebsparameter des Vorsatzgerätes einzustellen. Dabei wird von einer Bedienperson als ein maßgeblicher Betriebsparameter eine Schnitthöhe voreingestellt, welche sich an der Erntegutart und an den Erntegutverlusten bei der Aufnahme durch das Schneidwerk orientiert. Um möglichst geringe Erntegutverluste durch das Schneidwerk zu erzeugen, wird die Schnitthöhe durch die Bedienperson möglichst gering eingestellt.

Verfahren zum Betreiben einer selbstfahrenden Erntemaschine sowie selbstfahrende Erntemaschinen der eingangs genannten Art sind aus der EP 2 545 761 A1 und der EP 3 011 824 A1 bekannt. Die EP 2 545 761 A1 beschreibt eine Erntemaschine, an welcher ein Vorsatzgerät zum Schneiden und Aufnehmen von Erntegut angeordnet ist. Mittels einer Steuerungsvorrichtung werden Betriebsparameter des Vorsatzgerätes, zu denen die Schnitthöhe zählt, von einer Bedienperson eingestellt. Zwischen dem Vorsatzgerät und Vorderrädern der Erntemaschine befindet sich ein optischer Sensor, der die durch das Vorsatzgerät bearbeitete Fläche erfasst, um durch Datenauswertung Rückschlüsse auf eine Stoppelqualität nach dem Schneiden ziehen zu können. Anhand der Datenauswertung erfolgt eine Anpassung von Betriebsparametern, wie der Schnitthöhe, des Vorsatzgerätes.

Aufgabe der vorliegenden Erfindung ist es, ein Verfahren zum Betreiben einer selbstfahrenden Erntemaschine sowie eine selbstfahrende Erntemaschine bereitzustellen, welche sich durch eine optimierte Arbeitsweise im Hochschnitt auszeichnet.

Diese Aufgabe wird durch ein Verfahren zum Betreiben einer selbstfahrenden Erntemaschine gemäß den Merkmalen des Anspruches 1 sowie eine selbstfahrende Erntemaschine gemäß den Merkmalen des nebengeordneten Anspruches 10 gelöst.

Vorteilhafte Weiterbildungen des Verfahrens bzw. der Erntemaschine sind Gegenstand der Unteransprüche.

Gemäß dem Anspruch 1 wird ein Verfahren zum Betreiben einer selbstfahrenden Erntemaschine vorgeschlagen, umfassend ein Vorsatzgerät, mit welchem Erntegut geschnitten und aufgenommen wird, sowie eine Steuerungsvorrichtung, mit welcher Einstellparameter des Vorsatzgerätes eingestellt werden. Für eine optimierte Arbeitsweise des Vorsatzgerätes im Hochschnitt ist vorgesehen, dass durch ein Sensorsystem zumindest eine Bestandseigenschaft eines im Vorfeld des Vorsatzgerätes liegenden Erntegutbestandes und ein mit der zumindest einen Bestandseigenschaft korrelierendes Arbeitsergebnis eines hinter dem Vorsatzgerät liegenden abgeernteten Bereiches kontinuierlich detektiert werden und in Abhängigkeit von der zumindest einen Bestandseigenschaft und dem Arbeitsergebnis eine erforderliche Anpassung zumindest eines der Einstellparameter zum Betreiben des Vorsatzgerätes im Hochschnitt bestimmt wird. Das Verfahren ermöglicht eine automatische Optimierung der Arbeitsweise des Vorsatzgerätes im Hochschnitt dadurch, dass das Vorfeld und der rückwärtige Bereich des Vorsatzgerätes kontinuierlich detektiert und die erfassten Daten analysiert werden. Auf diese Weise lässt sich proaktiv auf Änderungen von Bestandseigenschaften reagieren, welche sich ohne eine Anpassung zumindest eines der Einstellparameter auf das Arbeitsergebnis negativ auswirken würden. Bei einem als Getreideschneidwerk ausgeführten Vorsatzgerät sind als Einstellparameter beispielhaft der Abstand des Messerbalkens zum Boden, der Schnittwinkel des Messerbalkens, die Drehzahl und/oder die Höhe der Haspel, die Position der Haspelfinger, sowie das Aus- und Einfahren des Schneidwerktisches zu nennen.

Vorzugsweise kann als eine Bestandseigenschaft ein Wert für einen Fruchtstandhorizont bereitgestellt werden, der durch das Sensorsystem überwacht wird. Die Verteilung von Fruchtständen erfolgt innerhalb des Fruchtstandhorizontes, welcher die Streuung von Fruchtstandhöhen in der Vertikalen beschreibt. Unter dem Begriff Fruchtstandhöhe ist dabei die jeweilige vertikale Beabstandung der Fruchtstände gegenüber dem Boden zu verstehen. Die Streuung der Fruchtstandhöhen resultiert unter anderem aus unterschiedlichen Halmlängen, durch das Einknicken während des Abreifeprozesses und dergleichen mehr, oder wird durch das Erntegut selbst bedingt, wie beispielsweise im Fall von Raps. Der Fruchtstandhorizont kann durch eine Bedienperson vorgegeben werden. Alternativ kann der Fruchtstandhorizont durch das Sensorsystem automatisch bestimmt werden.

Des Weiteren kann als eine Bestandseigenschaft eine Bestandshöhe und/oder Bestandsdichte durch das Sensorsystem bestimmt werden. Das Auftreten von Änderungen in der Bestandshöhe des Erntegutes, was auf das Abknicken von Halmen zurückzuführen sein kann, wird herangezogen, um zur proaktiven Minimierung von Erntegutverlusten das Vorsatzgerät temporär auf eine entsprechende Schnitthöhe abzusenken.

Insbesondere kann als Arbeitsergebnis ein Erntegutverlust durch das Sensorsystem bestimmt werden. Durch das Sensorsystem kann von dem Vorsatzgerät nicht erfasstes Erntegut, welches auf dem Boden bzw. am Halm oder Stängel zurückbleibt, detektiert und die Quantität der Erntegutverluste ausgewertet werden. Entsprechend fließt das Arbeitsergebnis in die Regelung ein.

Bevorzugt kann als Arbeitsergebnis die Stoppelhöhe durch das Sensorsystem detektiert werden. Die Einhaltung der Stoppelhöhe beeinflusst die von der Erntemaschine zu verarbeitende Erntegutmenge. Dies wirkt sich unmittelbar auf den Durchsatz der Erntemaschine aus. Je geringer der Anteil an von dem Vorsatzgerät aufgenommenen Nichtkornbestandteilen, desto größer der Durchsatz an Kornbestandteilen. Vor allem aber sinkt die Belastung von Abscheide- und Reinigungsorganen.

Weiterhin können als Betriebsparameter des Vorsatzgerätes eine maximale Stoppelhöhe sowie ein Abstandswert zwischen der maximalen Stoppelhöhe und einer unteren Fruchtstandhorizonthöhe bereitgestellt werden. Diese vorgebbaren Betriebsparameter können als Sollwerte für die Regelung der Einstellparameter des Vorsatzgerätes dienen. Die Eingabe dieser Betriebsparameter kann durch die Bedienperson erfolgen.

Erfindungsgemäß kann zur Regelung des zumindest einen Einstellparameters des Vorsatzgerätes auf einen einstellbaren Erfüllungsgrad zweier Ernteprozessparameter abgestellt werden, wobei der eine Ernteprozessparameter ein Grenzwert für den Erntegutverlust und der andere Ernteprozessparameter ein Grenzwert für die Stoppelhöhe ist. Hierdurch lässt sich insbesondere der Durchsatz der Erntemaschine beeinflussen. Durch eine Variation des Grenzwertes für die Stoppelhöhe hin zu einem höheren Wert, wird näher unterhalb des Fruchtstandhorizontes abgeschnitten, was zu einer Erhöhung des Durchsatzes führt, da weniger Halm- oder Stängelmaterial von dem Vorsatzgerät aufgenommen und von der Erntemaschine verarbeitet werden muss. Durch eine Variation des Grenzwertes für den Erntegutverlust hin zu einem höheren Wert, lässt sich der Erntegutverlust minimieren.

Gemäß einer bevorzugten Ausführungsform kann zur Regelung des zumindest einen Einstellparameters des Vorsatzgerätes georeferenzierte kartografische Daten verwendet werden. Mittels dieser Daten kann der zumindest eine Einstellparameter des Vorsatzgerätes angepasst werden, um strukturelle Ungleichmäßigkeiten des Bodens, wie Mulden oder Kuppen, auszugleichen.

Insbesondere kann die erforderliche Anpassung des zumindest einen Einstellparameters durch die Steuerungsvorrichtung automatisch durchgeführt werden. Hierdurch kann die Bedienperson bei der Bedienung der Erntemaschine erheblich entlastet werden. Die automatische Anpassung kann durch eine manuelle Änderung des zumindest einen Einstellparameters übersteuert werden.

Weiterhin kann die erforderliche Anpassung des zumindest einen Einstellparameters durch die Steuerungsvorrichtung als ein Vorschlag auf einer Anzeigeeinrichtung dargestellt werden. Der Bedienperson wird damit die Möglichkeit eingeräumt, über eine Anpassung des zumindest einen Einstellparameters selbst zu entscheiden.

Die vorliegende Erfindung betrifft eine selbstfahrende Erntemaschine gemäß dem Anspruch 10 umfassend ein Vorsatzgerät, mit welchem Erntegut geschnitten und aufgenommen wird, sowie eine Steuerungsvorrichtung, mit welcher Einstellparameter des Vorsatzgerätes einstellbar sind. Die erfindungsgemäße Erntemaschine umfasst ein Sensorsystem, welches zumindest eine Bestandseigenschaft eines im Vorfeld des Vorsatzgerätes befindlichen Erntegutbestandes und ein mit der zumindest einen Bestandseigenschaft korrelierendes Arbeitsergebnis eines hinter dem Vorsatzgerät befindlichen abgeernteten Bereiches detektiert, wobei die Steuerungsvorrichtung dazu eingerichtet ist, von dem Sensorsystem bereitgestellte Daten auszuwerten und in Abhängigkeit von der zumindest einen Bestandseigenschaft und dem detektierten Arbeitsergebnis eine erforderliche Anpassung zumindest eines Einstellparameters zum Betreiben des Vorsatzgerätes im Hochschnitt zu bestimmen.

Bevorzugt sollte das Sensorsystem zumindest zwei optische Sensoren umfassen, von denen der eine Sensor dazu eingerichtet ist, die zumindest eine Bestandseigenschaft im Vorfeld des Vorsatzgerätes zu detektieren, und der andere Sensor die zumindest eine Bestandseigenschaft des hinter dem Vorsatzgerät befindlichen abgeernteten Bereiches.

Dabei kann zumindest einer der optischen Sensoren als eine Kamera ausgebildet sein. Die zumindest eine Kamera kann als 2D-Kamera ausgeführt sein. Von der zumindest einen Kamera werden Bildaufnahmen des Bereichs hinter dem Vorsatzgerät kontinuierlich an die Steuerungsvorrichtung übermittelt. welche mittels eines Bildauswertungsprogramms die Bilddaten mittels geeigneter Algorithmen analysiert, um auf die Ernteverluste in Form von nicht geschnittenen Fruchtständen sowie auf die Stoppelhöhe schließen zu können.

Weiterhin kann einer der optischen Sensoren als Laserscanner ausgebildet sein. Mittels des Laserscanners kann die Bestandshöhe detektiert werden. Entsprechend lassen sich auch Lagerstellen im Erntegutbestand detektieren. Der Laserscanner kann Teil eines Lidar-System sein, insbesondere eines Raman-Lidar-Systems. Das Raman-Lidar-System ermöglicht es, die Höhe des Fruchtstandhorizontes wegen der unterschiedlichen reflektierten Wellenlängen von Fruchtständen und Halmen bzw. Stängeln automatisch zu bestimmen und der Regelung als Steuergröße vorzugeben. Somit können Einstellparameter, wie insbesondere die Schnitthöhe, generiert und automatisch eingestellt oder für eine manuelle Auswahl durch eine Bedienperson vorgeschlagen werden.

Eine bevorzugte Anordnung des den Bereich vor dem Schneidwerk erfassenden optischen Sensors erfolgt auf dem Dach einer Kabine der Erntemaschine. Hingegen kann der optische Sensor, der den Bereich hinter dem Vorsatzgerät erfasst, an einem Rahmenteil der Erntemaschine in einem Bereich unterhalb der Kabine oder im Inneren der Kabine der Erntemaschine hinter einer Frontscheibe vorgesehen sein. Die Anordnung des optischen Sensors ist vor Einflüssen wie Staub und dergleichen geschützt. Das Sichtfeld des optischen Sensors kann dabei durch einen Scheibenwischer an der Frontscheibe freigehalten werden. Alternativ kann der optische Sensor auch unterhalb des Schneidwerks angeordnet werden.

Die vorliegende Erfindung wird nachstehend anhand eines in den Zeichnungen dargestellten Ausführungsbeispieles näher erläutert.

Es zeigen:
- Fig. 1: eine schematische Seitenansicht einer selbstfahrenden Erntemaschine;
- Fig. 2: eine schematische Darstellung einer Steuerungsvorrichtung der Erntemaschine;
- Fig. 3: eine schematische Ansicht auf die Erntemaschine und ein Vorsatzgerät von oben

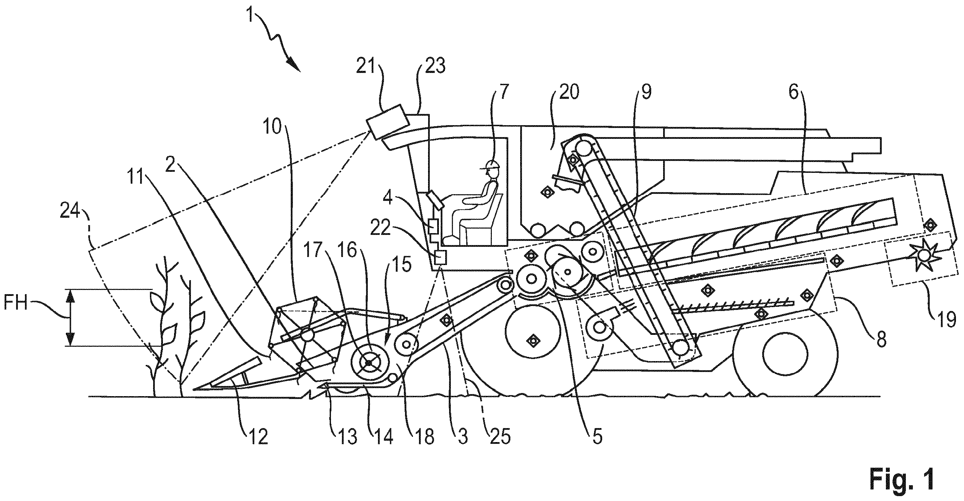

In Fig. 1 ist eine als Mähdrescher 1 ausgeführte landwirtschaftliche Erntemaschine dargestellt, welche ein als Vorsatzgerät ausgebildetes Schneidwerk 2 zum Schneiden und Aufnehmen von Erntegut aufweist. Das Schneidwerk 2 ist vorzugsweise austauschbar gegen ein anderes Schneidwerk 2, so dass die Erntemaschine 1 auf das Ernten unterschiedlicher Fruchtarten angepasst werden kann. Unter dem Begriff Erntegut ist dabei das gesamte vom Feldbestand durch das Schneidwerk 2 aufgenommene Material zu verstehen. Wie in Fig. 1 zu erkennen ist, wird ein Feldbestand durch das Schneidwerk 2 gemäht und das somit gewonnene Erntegut einem Schrägförderer 3 zugeführt.

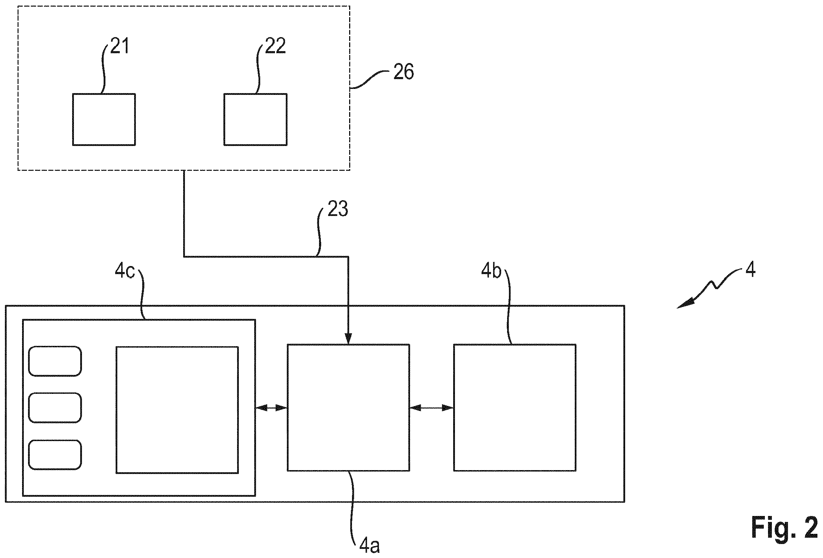

Der Mähdrescher 1 weist ferner eine Steuerungsvorrichtung 4 zur Ansteuerung zumindest des Schneidwerks 2 auf. Die Steuerungsvorrichtung 4 umfasst einen Speicher 4a zum Hinterlegen von Daten - also einen Speicher im informationstechnischen Sinne - und eine Rechenvorrichtung 4b zur Verarbeitung der in dem Speicher 4a hinterlegten Daten. Grundsätzlich ist die Steuerungsvorrichtung 4 dazu eingerichtet, einen Bedienperson 7 des Mähdreschers 1 bei der Bedienung zu unterstützen. Die Steuerungsvorrichtung 4 mit dem Speicher 4a und der Rechenvorrichtung 4b sowie einer Eingabe-Ausgabe-Vorrichtung 4c ist schematisch in Fig. 2 dargestellt.

Die Steuerungsvorrichtung 4 kann grundsätzlich zentral ausgestaltet sein. Sie dient insoweit der Ansteuerung nicht nur des Schneidwerks 2, sondern auch nachgelagerter Arbeitsorgane des Mähdreschers 1. Grundsätzlich ist es aber denkbar, dass die Steuerungsvorrichtung 4 dezentral strukturiert ist und aus einer Anzahl einzelner Steuersysteme zusammengesetzt ist. Dann kann es beispielsweise vorgesehen sein, dass zumindest ein Teil der Arbeitsorgane des Mähdreschers 1 jeweils ein zugeordnetes, dezentrales Steuersystem aufweisen.

Dem Schrägförderer 3 ist ein Dreschwerk 5 zum Dreschen von aufgenommenem Erntegut nachgeschaltet. Dem Dreschwerk 5 ist eine Abscheideanordnung 6 prozesstechnisch nachgelagert. Der dem Dreschwerk 5 zugeführte Erntegutstrom wird also im Anschluss - ohne das bereits vom Dreschwerk abgeschiedene Korngut - der Abscheideanordnung 6 zugeführt. In der Abscheideanordnung 6 wird das Erntegut mit dem in ihm verbliebenen Kornanteil so bearbeitet, dass auch das verbliebene Korngut möglichst aus dem Stroh und sonstigen Nichtkornbestandteilen herausgetrennt wird. Das im Dreschwerk 5 und der Abscheideanordnung 6 gewonnene Korngut wird dann einer Reinigungsanordnung 8 zugeführt. In der Reinigungsanordnung 8, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut mittels einer Fördervorrichtung 9, z. B. einen Kornelevator, in einen Korntank 20. Das ausgedroschene Stroh - also das verbliebene Erntegut in der Abscheideanordnung 6 - wird von dem Mähdrescher 1 im Heckbereich ausgebracht. Hierzu kann es auf dem Feldboden abgelegt werden, z. B. als Schwad entlang einer Fahrspur. Oder es wird durch eine Häckselvorrichtung 19 zerkleinert und anschließend durch eine der Häckselvorrichtung 19 nachgeordnete Verteilvorrichtung über die Arbeitsbreite des Mähdreschers 1 verteilt ausgebracht. Der Mähdrescher 1 weist ein Sensorsystem 26 auf, welches zumindest zwei optische Sensoren 21, 22 umfasst, die derart angeordnet und ausgerichtet sind, dass sie unterschiedliche Erfassungsbereiche 24, 25 abdecken. Die zumindest zwei optischen Sensoren 21, 22 sind in dem dargestellten Ausführungsbeispiel einer Kabine des Mähdreschers 1 zugeordnet und durch ein Bussystem 23 mit der Steuerungsvorrichtung 4 verbunden.

Das Schneidwerk 2 des dargestellten Mähdreschers 1 weist eine quer zu der Fahrtrichtung der Erntemaschine 1 verlaufende Haspel 10 auf, die durch daran angeordnete Zinken 11 bereits auf das noch ungeschnittene Erntegut einwirkt. Die Haspel 10 hat in erster Linie die Aufgabe, das Erntegut einem Messerbalken 12, der ein bewegliches Messer 13 aufweist, zuzuführen. Das Messer 13 oszilliert mit einer Schnittfrequenz, so dass das Erntegut geschnitten wird und auf einen Schneidtisch 14 fällt, an dessen Vorderseite sich der Messerbalken 12 befindet. Anschließend wird das Erntegut, ggf. unter weiterer Einwirkung durch die Haspel 10, mittels einer Einzugsschnecke 15 dem Schrägförderer 3 zugeführt. Hierfür ist die Einzugsschnecke 15 mit Blechen 16 ausgestattet, die beidseits eines mittleren Bereichs der Einzugsschnecke 15, der auch als "Einzugsbereich" bezeichnet wird, angeordnet sind. Dadurch wird das geschnittene Erntegut zunächst zum Einzugsbereich der Einzugsschnecke 15 und von dort zum Schrägförderer 3 transportiert. Im Einzugsbereich sind der Einzugsschnecke 15 mehrere Einzugsfinger 17 zugeordnet, die bezogen auf die Walzendrehung jeweils zyklisch in einem Ausfahrwinkel der Einzugsschnecke 15 aus der Einzugsschnecke 15 ausfahren und in einem Einfahrwinkel der Einzugsschnecke 15 In die Einzugsschnecke 15 einfahren. Das Einfahren der Einzugsfinger 17 ist erforderlich, um zu vermeiden, dass eingezogenes Erntegut vollständig um die Einzugsschnecke 15 herumläuft, ohne dem Schrägförderer 3 übergeben zu werden. Alle vorstehend genannten Komponenten des Schneidwerks 2 sind an einem Trägerrahmen 18 angeordnet, der sich aus mehreren Rahmenteilen zusammensetzt.

Je nach Ausgestaltung erlaubt das Schneidwerk 2 die Einstellung verschiedener Einstellparameter mittels entsprechender, hier nicht dargestellter Aktoren, die sich durch die Steuerungsvorrichtung 4 ansteuern lassen. Dem Messerbalken 12 beispielsweise sind als Einstellparameter die "Messerbalkenhöhe" bzw. "Schnitthöhe", d.h. der Abstand des Messerbalkens 12 zum Feldboden, und "Schnittwinkel" zugeordnet. Einem in seiner Länge veränderlichen Schneidtisch 14 ist der Einstellparameter "Schneidtischlänge" zugeordnet, welcher erntegutspezifisch eingestellt wird. Das Ernten von beispielsweise Gerste oder Weizen erfolgt mit einer kürzeren Schneidtischlänge als das Ernten von Raps. Der Haspel 10 sind die Einstellparameter "Haspelposition (horizontal)" und "Haspelposition (vertikal)" zugeordnet. Weiter bieten die Einstellparameter "Drehzahl Einzugsschnecke", "Drehzahl Haspel" und "Schnittfrequenz" weitere Einstellmöglichkeiten des Schneidwerks 2, die sich vorzugsweise mittels der Steuerungsvorrichtung 4 einstellen lassen. Schließlich ergibt sich aus der Steuerbarkeit der obigen Einzugsfinger 17 der Einstellparameter "Ausfahrwinkel Einzugsfinger", der definiert, in welcher Winkellage bezogen auf die Drehung der Einzugsschnecke 15 die Einzugsfinger 17 aus der Einzugsschnecke 15 ausfahren.

Die Einstellung der vorstehend genannten Einstellparameter des Schneidwerks 2 beeinflusst maßgeblich die Effizienz der nachgelagerten Arbeitsorgane des Mähdreschers 1. Die Effizienz der Arbeitsorgane, d.h. insbesondere von Dreschwerk 5, Abscheideanordnung 6 und Reinigungsanordnung 8 wird durch den Durchsatz an aufgenommenen Erntegut bestimmt. Die Menge an aufgenommenen wird unter anderem durch den Einstellparameter "Schnitthöhe" des Schneidwerks 2 bestimmt. Je geringer der Abstand des Messerbalkens 12 zum Feldboden, desto höher ist der Anteil an Stroh im abgeschnittenen und aufgenommenen Erntegut, das von den nachgeordneten Arbeitsorganen des Mähdreschers 1 verarbeitet werden muss.

Um den Anteil an Stroh in dem von dem Schneidwerk 2 aufgenommenen Erntegut zu reduzieren, wird das Schneidwerk 2 im Hochschnitt betrieben. Um dabei den Fahrer von einer permanenten Überwachung von Bestandseigenschaft und der damit verbundenen Anpassung der Einstellparameter des Schneidwerks 2 zu entlasten, ist vorgesehen, dass durch das Sensorsystem zumindest eine Bestandseigenschaft des im Vorfeld des Schneidwerks 2 befindlichen Erntegutbestandes und ein mit der zumindest einen Bestandseigenschaft korrelierendes Arbeitsergebnis des hinter dem Schneidwerk 2 befindlichen abgeernteten Bereiches detektiert werden und in Abhängigkeit von der zumindest einen Bestandseigenschaft und dem Arbeitsergebnis eine erforderliche Anpassung zumindest eines der Einstellparameter zum Betreiben des Schneidwerks 2 im Hochschnitt bestimmt wird. Hierzu bilden das Schneidwerk 2, zusammen mit der Steuerungsvorrichtung 4 und dem Sensorsystem 26 einen Hochschnittautomaten.

Bestandseigenschaften des Erntegutes sind, neben der Art des Erntegutes, Bestandsdichte sowie Bestandshöhe des Erntegutes und ein Fruchtstandhorizont FH. Mit dem Begriff Fruchtstandhorizont ist die Streuung der Verteilung von Fruchtständen, wie Ähren, in der Vertikalen gemeint. Aufgrund unterschiedlichen Wuchses des Erntegutes, wegen des Abknickens von Fruchtständen durch Witterungseinflüsse oder während des Abreifeprozesses ist die Bandbreite der Verteilung der Fruchtstände ungleichmäßig, sodass die Kenntnis der Bestandshöhe nicht ausreicht, um möglichst alle Fruchtstände beim Betreiben des Schneidwerks 2 im Hochschnitt zu erfassen.

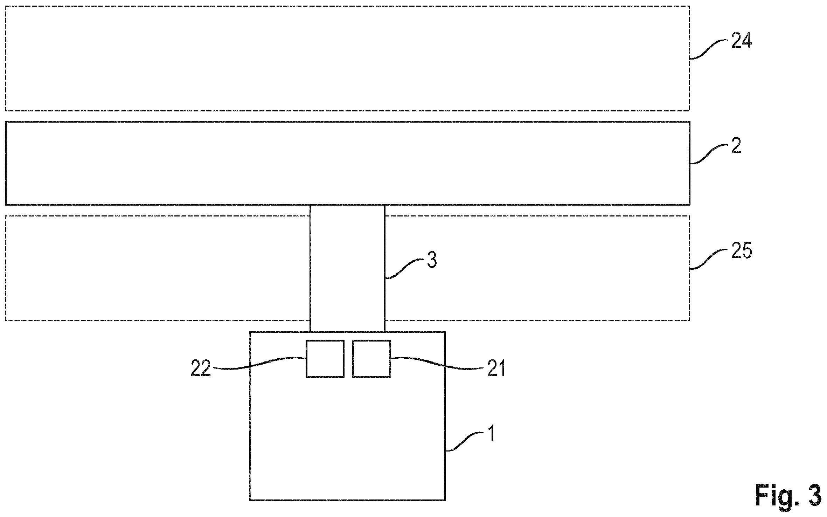

In Fig. 3 ist eine schematische Ansicht auf den Mähdrescher 1 und das Schneidwerk 2 von oben dargestellt. Der vordere Erfassungsbereich 24 befindet sich vor dem Schneidwerk 2 und wird durch den optischen Sensor 21 detektiert. Der hintere Erfassungsbereich 25 befindet sich unmittelbar hinter dem Schneidwerk 2 und wird von dem optischen Sensor 22 detektiert. Denkbar ist auch, die Anordnung des optischen Sensors 22 unterhalb des Schneidwerks 2 vornehmen, so dass der Abstand zwischen den beiden Erfassungsbereichen 24 und 25 reduziert wird. Dadurch kann die Reaktionszeit der Steuerungsvorrichtung 4 sinken. Der optische Sensor 21 ist in dem dargestellten Ausführungsbeispiel als Laserscanner eines Lidar-Systems ausgeführt. Der optische Sensor 22 als eine Kamera. Eine Ausgestaltung des Sensorsystems 26 nur mit als Kameras ausgeführten optischen Sensoren 21 und 22 ist ebenfalls denkbar. Die von den beiden optischen Sensoren 21, 22 kontinuierlich erfassten Bilddaten werden durch das Bussystem 23 an die Rechenvorrichtung 4b der Steuerungsvorrichtung 4 übertragen und mittels einer Bildanalysesoftware ausgewertet.

Mittels des optischen Sensors 21 wird der Erntegutbestand detektiert, um aus der Auswertung der Bilddaten auf die Bestandseigenschaften rückschließen zu können. Eine Ausführung des optischen Sensors 21 als Laserscanner eines Raman-Lidar-Systems ermöglicht es, zwischen den Fruchtständen und den Halmen des Erntegutes zu unterscheiden. Mittels eines solchen optischen Sensors 21 kann der Fruchtstandhorizont FH automatisch durch Bilddatenauswertung bestimmt werden. Änderungen in der unteren Fruchtstandhorizonthöhe lassen sich somit detektieren und bei der Anpassung der Einstellparameter berücksichtigen.

Der optische Sensor 22 detektiert den hinteren Erfassungsbereich 25, um ein durch das Schneidwerk 2 erzeugtes Arbeitsergebnis zu ermitteln. Dazu werden als Arbeitsergebnis die Stoppelhöhe sowie Erntegutverluste in Gestalt von nicht aufgenommen Fruchtständen oder Teilen hiervon durch den optischen Sensor 22 detektiert. Durch in dem Speicher 4a abrufbar hinterlegbare Algorithmen werden nicht geschnittene Fruchtstände oder Teile hiervon im Rahmen der Auswertung erkannt.

Für das Betreiben des Mähdreschers 1 bzw. des Schneidwerks 2 im Hochschnitt wird der Hochschnittautomat verwendet. Hierfür werden durch die Bedienperson 7 zunächst Vorgaben für die Betriebsparameter maximale Stoppelhöhe sowie einen Abstandswert bereitgestellt. Der Abstandswert stellt einen zusätzlichen Sicherheitsabstand zwischen der maximalen Stoppelhöhe und der unteren Fruchtstandhorizonthöhe. Darüber hinaus kann zudem die Höhe des Fruchtstandhorizonts FH durch die Bedienperson 7 manuell vorgegeben werden.

Der Hochschnittautomat regelt die Einstellungen zumindest eines der Einstellparameter des Schneidwerks 2 ausgehend von den Sollwertvorgaben für die Betriebsparameter maximale Stoppelhöhe sowie Abstandswert. Zusätzlich wird zur Regelung des zumindest einen Einstellparameters des Schneidwerkes 2 auf einen einstellbaren Erfüllungsgrad zweier Ernteprozessparameter abgestellt, der durch die Bedienperson 7 durch eine Eingabe mittels der Eingabe-Ausgabe-Vorrichtung 4c festlegbar ist. Bei den Ernteprozessparametern handelt es sich um einen Grenzwert für den Erntegutverlust und einen Grenzwert für die Stoppelhöhe. Diese Festlegung beeinflusst die Regelung des Schneidwerkes 2 in der Weise, dass aufgrund der von dem Hochschnittautomaten bestimmten Einstellung des zumindest einen Einstellparameters entweder die Ernteverluste möglichst gering gehalten werden oder der Durchsatz erhöht wird, indem aufgrund der von dem Hochschnittautomaten bestimmten Einstellung des zumindest einen Einstellparameters die maximale Stoppelhöhe möglichst genau eingehalten wird.

Die Bestimmung der erforderlichen Einstellung des zumindest einen Einstellparameters des Schneidwerks 2 erfolgt, wie weiter oben bereits ausgeführt, dadurch das der eine optische Sensor 21 zumindest eine Bestandseigenschaft detektiert, während der zweite optische Sensor 22 das Arbeitsergebnis der vorgenommenen Einstellung detektiert. Bei detektierten Änderungen in den Bestandseigenschaften wird eine erforderliche Anpassung der Einstellung zumindest eines Einstellparameters bestimmt, um den Erfüllungsgrad des festgelegten Ernteprozessparameters einhalten zu können. Die Einstellung kann durch die Steuerungsvorrichtung 4 automatisch vorgenommen werden. Alternativ oder zusätzlich kann die bestimmte Änderung der Einstellung des zumindest einen Einstellparameters als ein Vorschlag auf der Eingabe-Ausgabe-Vorrichtung 4c der Bedienperson 7 angezeigt werden. Die Bedienperson 7 erhält dadurch die Möglichkeit die Übernahme der vorgeschlagenen Einstellung zu bestätigen oder gegebenenfalls zu modifizieren.

Werden beispielhaft im Vorfeld des Schneidwerks 2 im abzuerntenden Feld sporadisch auftretende Lagerstellen durch den optischen Sensor 21 detektiert, so stellt der Hochschnittautomat automatisch die "Schnitthöhe" als Einstellparameter tiefer, um Verluste zu minimieren.

Gemäß einem anderen beispielhaften Anwendungsfall wird seitens der Bedienperson 7 der Ernteprozessparameter in der Weise festgelegt, dass die Einhaltung der maximalen Stoppelhöhe im Vordergrund steht. Die Bestandsbedingungen im Vorfeld weisen keine Lagerstellen auf. Der durch den optischen Sensor 21 detektierte Fruchtstandhorizont ist jedoch sehr hoch. Der Hochschnittautomat regelt die "Schnitthöhe" des Schneidwerkes 2 in der Weise, dass der gesamte Fruchtstandhorizont FH in das Schneidwerk 2 gelangt.

Das Ziel der Regelung durch den Hochschnittautomaten ist es, stets einen an die Bestandsbedingungen und das Arbeitsergebnis angepassten optimierten Einstellwert zu bestimmen und automatisch einzustellen bzw. vorzuschlagen. Indem die Bestandsbedingungen im Vorfeld detektiert werden und die aus den vorliegenden Einstellungen resultierenden Arbeitsergebnisse detektiert und ausgewertet werden, lässt sich eine automatisierte Regelung im Hochschnittbetrieb erreichen, welche die Bedienperson 7 von einer kontinuierlichen Überwachung des Vorfelds im Hinblick auf Änderungen von Bestandseigenschaften und der damit verbundenen Entscheidung über die Vornahme der Änderung zumindest eines Einstellparameters des Schneidwerkes 2 entlastet wird.

Liegen georeferenzierte kartographische Daten vor, die in dem Speicher 4a abrufbar hinterlegbar sind, können diese im Zuge der Regelung genutzt werden, um Störungen durch Bodenwellen, wie Mulden oder Kuppen, automatisch auszugleichen. Entsprechend können als Reaktion auf solche Störungen Einstellparameter wie "Schnitthöhe" oder "Schnittwinkel" verändert werden.

### Bezugszeichenliste

- 1: Mähdrescher
- 2: Schneidwerk
- 3: Schrägförderer
- 4: Steuerungsvorrichtung
- 4a: Speicher
- 4b: Rechenvorrichtung
- 4c: Eingabe-Ausgabe-Vorrichtung
- 5: Dreschwerk
- 6: Abscheideanordnung
- 7: Bedienperson
- 8: Reinigungsanordnung
- 9: Fördervorrichtung
- 10: Haspel
- 11: Zinken
- 12: Messerbalken
- 13: Messer
- 14: Schneidtisch
- 15: Einzugsschnecke
- 16: Blech
- 17: Einzugsfinger
- 18: Trägerrahmen
- 19: Häckselvorrichtung
- 20: Korntank
- 21: Optischer Sensor
- 22: Optischer Sensor
- 23: Bussystem
- 24: Erfassungsbereich von 21
- 25: Erfassungsbereich von 22
- 26: Sensorsystem

## Patentansprüche

1. Verfahren zum Betreiben einer selbstfahrenden Erntemaschine (1), umfassend ein Vorsatzgerät (2), mit welchem Erntegut geschnitten und aufgenommen wird, sowie eine Steuerungsvorrichtung (4), mit welcher Einstellparameter des Vorsatzgerätes (2) eingestellt werden, **dadurch gekennzeichnet, dass** durch ein Sensorsystem (26) zumindest eine Bestandseigenschaft eines im Vorfeld des Vorsatzgerätes (2) befindlichen Erntegutbestandes und ein mit der zumindest einen Bestandseigenschaft korrelierendes Arbeitsergebnis eines hinter dem Vorsatzgerät (2) befindlichen abgeernteten Bereiches detektiert werden und in Abhängigkeit von der zumindest einen Bestandseigenschaft und dem Arbeitsergebnis eine erforderliche Anpassung zumindest eines der Einstellparameter zum Betreiben des Vorsatzgerätes (2) im Hochschnitt bestimmt wird wobei zur Regelung des zumindest einen Einstellparameters des Vorsatzgerätes (2) auf einen einstellbaren Erfüllungsgrad zweier Ernteprozessparameter abgestellt wird, wobei der eine Ernteprozessparameter ein Grenzwert für den Erntegutverlust und der andere Ernteprozessparameter ein Grenzwert für die Stoppelhöhe ist.

2. Verfahren nach Anspruch 1, **dadurch gekennzeichnet, dass** als eine Bestandseigenschaft ein Wert für einen Fruchtstandhorizont (FH) bereitgestellt wird, der durch das Sensorsystem (26) überwacht wird.

3. Verfahren nach Anspruch 1 oder 2, **dadurch gekennzeichnet, dass** als eine Bestandseigenschaft eine Bestandshöhe und/oder Bestandsdichte durch das Sensorsystem (26) bestimmt wird.

4. Verfahren nach einem der Ansprüche 1 bis 3, **dadurch gekennzeichnet, dass** als Arbeitsergebnis ein Erntegutverlust durch das Sensorsystem (26) bestimmt wird.

5. Verfahren nach einem der Ansprüche 1 bis 4, **dadurch gekennzeichnet, dass** als Arbeitsergebnis die Stoppelhöhe durch das Sensorsystem (26) detektiert wird.

6. Verfahren nach Anspruch 5, **dadurch gekennzeichnet, dass** als Betriebsparameter des Vorsatzgerätes (2) eine maximale Stoppelhöhe sowie ein Abstandswert zwischen der maximalen Stoppelhöhe und einer unteren Fruchtstandhorizonthöhe bereitgestellt werden.

7. Verfahren nach einem der vorangehenden Ansprüche, **dadurch gekennzeichnet, dass** zur Regelung des zumindest einen Einstellparameters des Vorsatzgerätes (2) georeferenzierte kartografische Daten verwendet werden.

8. Verfahren nach einem der vorangehenden Ansprüche, **dadurch gekennzeichnet, dass** die erforderliche Anpassung des zumindest einen Einstellparameters durch die Steuerungsvorrichtung (4) automatisch durchgeführt wird.

9. Verfahren nach einem der vorangehenden Ansprüche, **dadurch gekennzeichnet, dass** die erforderliche Anpassung des zumindest einen Einstellparameters durch die Steuerungsvorrichtung (4) als ein Vorschlag auf einer Anzeigeeinrichtung (4c) dargestellt wird.

10. Selbstfahrende Erntemaschine (1), umfassend ein Vorsatzgerät (2), welches eingerichtet ist Erntegut zu schneiden und aufzunehmen, sowie eine Steuerungsvorrichtung (2), mit welcher Einstellparameter des Vorsatzgerätes (2) einstellbar sind, **dadurch gekennzeichnet, dass** die Erntemaschine (1) ein Sensorsystem (26) umfasst, welches dazu eingerichtet ist zumindest eine Bestandseigenschaft eines im Vorfeld des Vorsatzgerätes (2) befindlichen Erntegutbestandes und ein mit der zumindest einen Bestandseigenschaft korrelierendes Arbeitsergebnis eines hinter dem Vorsatzgerät (2) befindlichen abgeernteten Bereiches zu detektieren, wobei die Steuerungsvorrichtung (4) dazu eingerichtet ist, von dem Sensorsystem (26) bereitgestellte Daten auszuwerten und in Abhängigkeit von der zumindest einen Bestandseigenschaft und dem detektierten Arbeitsergebnis eine erforderliche Anpassung zumindest eines Einstellparameters zum Betreiben des Vorsatzgerätes (2) im Hochschnitt zu bestimmen wobei zur Regelung des zumindest einen Einstellparameters des Vorsatzgerätes (2) auf einen einstellbaren Erfüllungsgrad zweier Ernteprozessparameter abgestellt wird, wobei der eine Ernteprozessparameter ein Grenzwert für den Erntequtverlust und der andere Ernteprozessparameter ein Grenzwert für die Stoppelhöhe ist.

11. Erntemaschine (1) nach Anspruch 10, **dadurch gekennzeichnet, dass** das Sensorsystem (26) zumindest zwei optische Sensoren (21, 22) umfasst, von denen der eine Sensor (21) dazu eingerichtet ist, die zumindest eine Bestandseigenschaft im Vorfeld des Vorsatzgerätes (2) zu detektieren, und der andere Sensor (22) die zumindest eine Bestandseigenschaft des hinter dem Vorsatzgerät (2) liegenden abgeernteten Bereiches.

12. Erntemaschine nach Anspruch 11, **dadurch gekennzeichnet, dass** zumindest einer der optischen Sensoren (22) als eine Kamera ausgebildet ist.

13. Erntemaschine nach Anspruch 11 oder 12, **dadurch gekennzeichnet, dass** einer der optischen Sensoren (21) als Laserscanner ausgebildet ist, der Teil eines Lidar-System, insbesondere eines Raman-Lidar-Systems, ist.

## Claims

1. A method of operating a self-propelled harvester (1) including a front attachment (2) with which crop material is cut and picked up, and a control device (4) with which setting parameters of the front attachment (2) are set, **characterised in that** at least one stand property of a crop material stand disposed in the field in front of the front attachment (2) and a working result correlating with the at least one stand property of a harvested region behind the front attachment (2) are detected by a sensor system (26) and in dependence on the at least one stand property and the working result a necessary adaptation at least of one of the setting parameters is determined for operating the front attachment (2) in a high cut.

2. A method according to claim 1 **characterised in that** a value for a fruit stand horizon (FH) is provided as the stand property, that is monitored by the sensor system (26).

3. A method according to claim 1 or claim 2 **characterised in that** a stand height and/or a stand density is determined by the sensor system (26) as a stand property.

4. A method according to one of claims 1 to 3 **characterised in that** a crop material loss is determined by the sensor system (26) as the working result.

5. A method according to one of claims 1 to 4 **characterised in that** the stubble height is determined by the sensor system (26) as the working result.

6. A method according to claim 5 **characterised in that** a maximum stubble height and a distance value between the maximum stubble height and a lower fruit stand horizon height is provided as the operating parameter of the front attachment (2).

7. A method according to one of the preceding claims **characterised in that** georeferenced mapping data are used for regulating the at least one setting parameter of the front attachment (2).

8. A method according to one of the preceding claims **characterised in that** the required adaptation of the at least one setting parameter is automatically implemented by the control device (4).

9. A method according to one of the preceding claims **characterised in that** the required adaptation of the at least one setting parameter by the control device is represented as a proposal on a display device (4c).

10. A self-propelled harvester (1) including a front attachment (2) adapted to cut and pick up crop material, and a control device (2) with which setting parameters of the front attachment (2) can be set, **characterised in that** the harvester (1) comprise a sensor system (26) which is adapted to detect at least one stand property of a crop material stand in the field in front of the front attachment (2) and a working result correlating with the at least one stand property of a harvested region behind the front attachment (2), wherein the control device (4) is adapted to evaluate data provided by the sensor system (26) and in dependence on the at least one stand property and the detected working result to determine a necessary adaptation of at least one setting parameter for operation of the front attachment (2) in a high cut.

11. A harvester (1) according to claim 10 **characterised in that** the system (26) comprises at least two optical sensors (21, 22) of which the one sensor (21) is adapted to detect the at least one stand property in the field in front of the front attachment (2) and the other sensor (22) is adapted to detect the at least one stand property of the harvested region behind the front attachment (2).

12. A harvester according to claim 11 **characterised in that** at least one of the optical sensors (22) is in the form of a camera.

13. A harvester according to claim 11 or claim 12 **characterised in that** one of the optical sensors (21) is in the form of a laser scanner which is part of a Lidar system, in particular a Raman Lidar system.

## Revendications

1. Procédé de fonctionnement d'une machine de récolte automotrice (1), incluant un outil frontal (2), avec lequel du produit récolté est coupé et ramassé, ainsi qu'un dispositif de commande (4) à l'aide duquel des paramètres de réglage de l'outil frontal (2) peuvent être réglés, **caractérisé en ce que**, par l'intermédiaire d'un système de capteurs (26), au moins une propriété de culture d'une culture à récolter se trouvant dans la zone d'approche de l'outil frontal (2) et un résultat de travail, corrélé avec l'au moins une propriété de culture, d'une zone moissonnée située derrière l'outil frontal (2) sont détectés et, en fonction de l'au moins une propriété de culture et du résultat de travail, une adaptation requise au moins d'un des paramètres de réglage est déterminée pour faire fonctionner l'outil frontal (2) en coupe haute, dans lequel pour réguler l'au moins un paramètre de réglage de l'outil frontal (2), on opte pour un degré réglable de réalisation de deux paramètres de processus de récolte, dans lequel l'un des paramètres de processus de récolte est une valeur limite pour la perte de produit récolté et l'autre paramètre de processus de récolte est une valeur limite pour la hauteur de chaume.

2. Procédé selon la revendication 1, **caractérisé en ce que** comme propriété de culture est fournie une valeur pour un horizon d'infrutescence (FH) qui est surveillée par l'intermédiaire du système de capteurs (26).

3. Procédé selon la revendication 1 ou 2, **caractérisé en ce que** comme propriétés de culture sont déterminées par l'intermédiaire du système de capteurs (26) une hauteur de culture et/ou une densité de culture.

4. Procédé selon une des revendications 1 à 3, **caractérisé en ce que** comme résultat de travail est déterminée par l'intermédiaire du système de capteurs (26) une perte de produit récolté.

5. Procédé selon une des revendications 1 à 4, **caractérisé en ce que** comme résultat de travail est détectée par l'intermédiaire du système de capteurs (26) la hauteur de chaume.

6. Procédé selon la revendication 5, **caractérisé en ce que** comme paramètres d'exploitation de l'outil frontal (2) sont fournies une hauteur de chaume maximale ainsi qu'une valeur de distance entre la hauteur de chaume maximale et une hauteur inférieure d'horizon d'infrutescence.

7. Procédé selon une des revendications précédentes, **caractérisé en ce que** pour réguler l'au moins un paramètre de réglage de l'outil frontal (2), on emploie des données cartographiques géoréférencées.

8. Procédé selon une des revendications précédentes, **caractérisé en ce que** l'adaptation requise de l'au moins un paramètre de réglage est réalisée automatiquement par l'intermédiaire du dispositif de commande (4).

9. Procédé selon une des revendications précédentes, **caractérisé en ce que** l'adaptation requise de l'au moins un paramètre de réglage par l'intermédiaire du dispositif de commande (4) est représentée comme une proposition sur un équipement d'affichage (4c).

10. Machine de récolte automotrice (1), incluant un outil frontal (2), qui est agencé pour couper et ramasser du produit récolté, ainsi qu'un dispositif de commande (2) avec lequel des paramètres de réglage de l'outil frontal (2) sont réglables, **caractérisée en ce que** la machine de récolte (1) inclut un système de capteurs (26) qui est agencé pour détecter au moins une propriété de culture d'une culture à récolter se trouvant dans la zone d'approche de l'outil frontal (2) et un résultat de travail, corrélé avec l'au moins une propriété de culture, d'une zone moissonnée située derrière l'outil frontal (2), dans lequel le dispositif de commande (4) est agencé pour analyser des données fournies par le système de capteurs (26) et, en fonction de l'au moins une propriété de culture et du résultat de travail détecté, pour déterminer une adaptation requise au moins d'un paramètre de réglage pour faire fonctionner l'outil frontal (2) en coupe haute, dans lequel pour réguler l'au moins un paramètre de réglage de l'outil frontal (2), on opte pour un degré réglable de réalisation de deux paramètres de processus de récolte, dans lequel l'un des paramètres de processus de récolte est une valeur limite pour la perte de produit récolté et l'autre paramètre de processus de récolte est une valeur limite pour la hauteur de chaume.

11. Machine de récolte (1) selon la revendication 10, **caractérisée en ce que** le système de capteurs (26) inclut au moins deux capteurs optiques (21, 22) dont un capteur (21) est agencé pour détecter au moins une propriété de culture dans la zone d'approche de l'outil frontal (2), et l'autre capteur (22) est agencé pour détecter l'au moins une propriété de culture de la zone moissonnée située derrière l'outil frontal (2).

12. Machine de récolte selon la revendication 11, **caractérisée en ce qu'**au moins un des capteurs optiques (22) est conformé en caméra.

13. Machine de récolte selon la revendication 11 ou 12, **caractérisée en ce qu'**un des capteurs optiques (21) est conformé en scanner laser qui fait partie d'un système lidar, en particulier d'un système lidar Raman.
